# EUROPEAN PATENT APPLICATION

(11) **EP 2 100 710 A1**
(43) Date of publication of application: **16.09.2009**
(21) Application number: 07859722.6
(22) Date of filing: 05.12.2007
(51) Int. Cl.: B29C 33/42, B29C 33/38, B29C 45/37

(54) **HEAT INSULATING MOLD, MOLD COMPONENT, MOLDING MACHINE, AND METHOD FOR MANUFACTURING THE HEAT INSULATING MOLD**

(30) Priority: 07.12.2006 JP 2006330395
(71) Applicant: Sumitomo Heavy Industries, LTD., Tokyo 141-6025 (JP)
(72) Inventor: HIRATA, Toru, Yokosuka-shi Kanagawa 237-0061 (JP)
(74) Representative: Wagner, Karl H.
(86) International application number: PCT/JP2007/073494
(87) International publication number: WO 2008/069235

(57) **Abstract**

An object is to shorten molding cycle and improve durability of a heat-insulating layer (25). A heat-insulating mold comprises a mold plate and a transfer member attached to the mold plate and comprising a transfer surface on a surface which faces a cavity (C1, C2), the transfer surface comprising fine projections and depressions formed in a predetermined pattern. A heat-insulating layer (25) whose surface is densified is formed on a surface of the mold plate which surface comes into contact with the transfer member. Since the heat-insulating layer (25) is formed on a surface of the mold plate which surface comes into contact with the transfer member, the temperature of a molding material charged into the cavity (C1, C2) is temporarily maintained by the heat-insulating layer (25). As a result, formation and growth of a surface-hardened layer can be delayed, and transfer of the pattern of the transfer surface can be completed before the formation and growth of the surface-hardened layer. Since the surface of the heat-insulating layer (25) is densified, the surface of the heat-insulating layer (25) can be made very smooth. The durability of the heat-insulating layer (25) can be enhanced.

## Description

### TECHNICAL FIELD

The present invention relates to a heat-insulating mold, a mold component, a molding machine, and a method for manufacturing the heat-insulating mold.

### BACKGROUND ART

Conventionally, in a molding machine, such as an injection molding machine, resin melted within a heating cylinder is charged into a cavity in a mold apparatus, and is then cooled and hardened in the cavity so as to obtain a molded product.

The injection molding machine includes a mold apparatus, a mold-clamping apparatus, and an injection apparatus. The injection apparatus includes a heating cylinder for heating and melting resin; an injection nozzle attached to a front end of the heating cylinder so as to inject the molten resin; a screw disposed in the heating cylinder so that the screw can rotate and can advance and retreat; etc. The mold apparatus includes a stationary mold and a movable mold. The mold-clamping apparatus advances and retreats the movable mold so as to close, clamp, and open the mold apparatus. When the mold apparatus is clamped, a cavity is formed between the stationary mold and the movable mold.

When the screw is rotated in a metering step, resin supplied to the interior of the heating cylinder is melted and accumulated in front of the screw, and the screw is retreated accordingly. During this period, the mold apparatus is closed and clamped. Subsequently, in an injection step, the screw is advanced, whereby the resin accumulated in front of the screw is injected from the injection nozzle and charged into the cavity. In a cooling step, the resin in the cavity is cooled and hardened, whereby a molded product is obtained. Subsequently, the mold apparatus is opened, and the molded product is removed therefrom.

In the case where a product having fine projections and depressions of a predetermined pattern, such as a light guide member or a disc substrate, is to be molded, an insert is attached to, for example, a surface of the movable mold which surface faces the stationary mold. A transfer surface including projections and depressions corresponding to the above-mentioned fine projections and depressions is formed on a surface of the insert which surface faces the stationary mold. The pattern of the transfer surface is transferred to resin such as polycarbonate charged into the cavity.

In such a mold apparatus, cooling temperature, which is the temperature of the entire mold apparatus, including the wall surface of the cavity, is set to a temperature several tens of degrees (Celsius) lower than the glass transition temperature of the resin so as to cool the resin. Thus, the time required to harden the resin is shortened, whereby molding cycle is shortened.

Incidentally, when the resin injected from the injection nozzle flows into the cavity and comes into contact with the wall surface of the cavity, a surface-hardened layer (skin layer) is formed instantaneously. Although the state of formation of the surface-hardened layer changes depending on molding conditions, the type of the resin, and other factors, in general, the formation time is 0.1 sec or less, and the thickness is about several tens of microns. If the surface-hardened layer grows, proper molding is hindered at a portion of the resin which is in contact with the wall surface of the cavity, so that weld, transfer defect, or a like molding defect occurs.

In order to solve the above-mentioned problem, a heat-insulating mold has been provided. In the heat-insulating mold, a heat-insulating layer formed of a heat-insulating material which is low in thermal conductivity is formed in the vicinity of the wall surface of the cavity. In this case, since the insert can be thermally insulated from a mold main portion of the movable mold in which a heat-insulating layer is not formed, formation and growth of a surface-hardened layer can be delayed, and transfer of the pattern of the transfer surface can be completed before the formation and growth of the surface-hardened layer. Therefore, occurrence of molding defects can be prevented (see, for example, Patent Document 1).
Patent Document 1: Japanese Patent Application Laid-Open *(kokai)* No. H10-626.

### DISCLOSURE OF THE INVENTION

### PROBLEMS TO BE SOLVED BY THE INVENTION

However, in the case of the above-described conventional heat-insulating mold, the durability of the heat-insulating layer lowers depending on the selected insulating material, the method employed for formation of the heat-insulating layer, etc.

For example, a heat-insulating layer of a polymer material may be formed on a surface of the mold main portion, with which the insert comes into contact. However, in this case, due to expansion and contraction in a heat cycle repeated as a result of repeated molding operation, a surface of the heat-insulating layer and a corresponding surface of the mold main portion scrape against each other, whereby the heat-insulating layer is worn away.

Further, since the heat-insulating layer disclosed in Patent Document 1 has pores, even when finish polishing is performed, a roughness corresponding to the pores appears on the surface. As a result, when a stamper expands and contracts as a result of a change in temperature of resin which is being molded, scraping marks may be formed on the back surface of the stamper. Further, DLC coating may be performed in order to prevent formation of scraping marks. However, if DLC coating is performed on a rough surface, bonding stability lowers.

An object of the present invention is to solve the above-mentioned problem in the conventional heat-insulating mold and to provide a heat-insulating mold which can prevent occurrence of molding defects, can shorten molding cycle, and can improve durability of a heat-insulating layer, as well as a mold component, a molding machine, and a method for manufacturing the heat-insulating mold.

### MEANS FOR SOLVING THE PROBLEMS

To achieve the above object, a heat-insulating mold of the present invention comprises a mold plate and a transfer member comprising a transfer surface on a surface of the transfer member which surface faces a cavity, the transfer surface comprising fine projections and depressions formed in a predetermined pattern.

A heat-insulating layer whose surface is densified is formed on a surface of the mold plate which surface comes into contact with the transfer member.

### EFFECTS OF THE INVENTION

According to the present invention, a heat-insulating mold comprises a mold plate and a transfer member attached to the mold plate and comprising a transfer surface on a surface which faces a cavity, the transfer surface comprising fine projections and depressions formed in a predetermined pattern.

A heat-insulating layer whose surface is densified is formed on a surface of the mold plate which surface comes into contact with the transfer member.

In this case, since a heat-insulating layer is formed on a surface of the mold plate which surface comes into contact with the transfer member, the temperature of a molding material charged into a cavity is temporarily maintained by the heat-insulating layer. As a result, formation and growth of a surface-hardened layer can be delayed, and transfer of the pattern of the transfer surface can be completed before the formation and growth of the surface-hardened layer. Therefore, occurrence of molding defects can be prevented. Further, since the cooling temperature of the heat-insulating mold can be lowered, molding cycle can be shortened.

Since the surface of the heat-insulating layer is densified, the surface of the heat-insulating layer can be made very smooth. Accordingly, it becomes possible to enhance the durability of the heat-insulating layer, prevent formation of scraping marks on the back surface of the transfer member, and improve the durability of the transfer member.

### BRIEF DESCRIPTION OF THE DRAWINGS

[FIG. 1] Sectional view of a heat-insulating mold according to a first embodiment of the present invention.
[FIG. 2] View showing a first step of a method of forming a heat-insulating layer in the first embodiment of the present invention.
[FIG. 3] View showing a second step of the method of forming the heat-insulating layer in the first embodiment of the present invention.
[FIG. 4] View showing a third step of the method of forming the heat-insulating layer in the first embodiment of the present invention.
[FIG. 5] View showing a fourth step of the method of forming the heat-insulating layer in the first embodiment of the present invention.
[FIG. 6] View showing a fifth step of the method of forming the heat-insulating layer in the first embodiment of the present invention.
[FIG. 7] View showing a sixth step of the method of forming the heat-insulating layer in the first embodiment of the present invention.
[FIG. 8] First view showing a method of forming a heat-insulating layer in a second embodiment of the present invention.
[FIG. 9] Second view showing the method of forming a heat-insulating layer in the second embodiment of the present invention.
[FIG. 10] Schematic view showing a discharge plasma sintering apparatus according to a third embodiment of the present invention.

### DESCRIPTION OF SYMBOLS

11: mold apparatus
21: upper plate
24: insert
25: heat-insulating layer
C1, C2: cavity

### BEST MODE FOR CARRYING OUT THE INVENTION

Embodiments of the present invention will next be described in detail with reference to the drawings. Herein, an injection molding machine, which is an example molding machine, will be described.

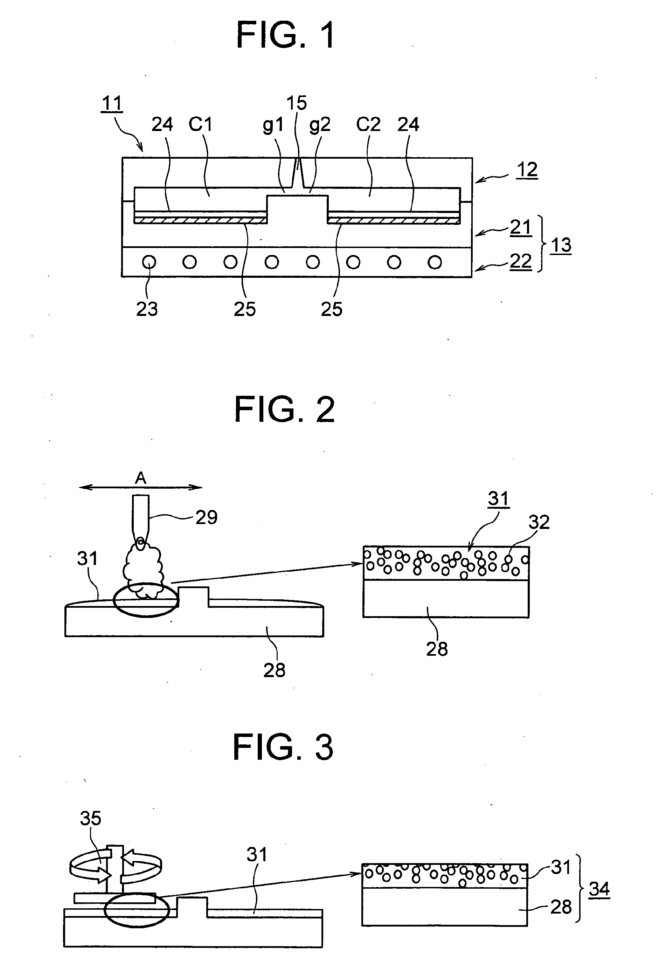

FIG. 1 is a sectional view of a heat-insulating mold according to a first embodiment of the present invention.

In FIG. 1, reference numeral 11 denotes a mold apparatus (a heat-insulating mold) for molding a product such as a light guide plate or a disc substrate; reference numeral 12 denotes a stationary mold (a first mold); reference numeral 13 denotes a movable mold (a second mold) disposed such that it can advance toward the stationary mold 12 and retreat away therefrom; and C1 and C2 denote cavities formed between the stationary mold 12 and the movable mold 13 as a result of mold clamping.

The movable mold 13 includes an upper plate (a mold plate; a first mold component) 21 and a lower plate (a support plate; a second mold component) 22, which supports the upper plate 21. An insert (a transfer member) 24 is attached to a surface of the upper plate 21 which surface faces the stationary mold 12. A transfer surface including fine projections and depressions formed in a predetermined pattern is formed on a surface of the insert 24 which surface faces the stationary mold 12. Notably, the upper plate 21 and the lower plate 22 are made of stainless steel so as to maintain rigidity, and the insert 24 is made mainly of nickel (Ni) so as to realize good machinability.

Incidentally, in the present embodiment, in order to shorten molding cycle, a heat-insulating layer 25 made of an insulating material and having a densified surface is formed on a surface of the upper plate 21 which surface comes into contact with the insert 24. A temperature-control-medium flow channel 23 is formed in the lower plate 22. A temperature control medium, such as water or air, fed from an unillustrated temperature controller flows through the temperature-control-medium flow channel 23 so as to cool the mold apparatus 11 and an unillustrated resin (a molding material) within the cavities C1 and C2.

Further, reference numeral 15 denotes a sprue formed in the stationary mold 12, and a distal end of the sprue 15 is connected to the cavities C1 and C2 via gates g1 and g2, respectively, each of which serves as a resin inflow section.

In the present embodiment, the insert 24 is attached to the upper plate 21 of the movable mold 13, and the heat-insulating layer 25 is formed on the surface of the upper plate 21 which surface comes into contact with the insert 24. However, the embodiment may be modified such that an upper plate and a lower plate are provided on the stationary mold 12 side, an insert is attached to a surface of the upper plate which surface faces the movable mold 13, a heat-insulating layer is formed on a surface of the upper plate which surface comes into contact with the movable mold 13, and a temperature-control-medium flow channel is formed in the lower plate. Further, in the present embodiment, the movable plate 13 is composed of the upper plate 21 and the lower plate 22. However, the movable plate 13 may be formed as a single member.

Incidentally, through operation of an unillustrated mold-clamping apparatus, the movable mold 13 can be advanced for mold closing, and then brought into contact with the stationary mold 12 for mold clamping. As a result, the above-described cavities C1 and C2 are formed between the stationary mold 12 and the movable mold 13. Further, the movable mold 13 can be separated from the stationary mold 12 for mold opening.

The mold-clamping apparatus includes a stationary platen (a first platen); a toggle support (a base plate); tie bars disposed and extending between the stationary platen and the toggle support; a movable platen (a second platen) disposed such that the movable platen faces the stationary platen and can advance and retreat along the tie bars; a toggle mechanism disposed between the movable platen and the toggle support; a mold-clamping motor serving as a drive section for mold clamping; etc. The above-described stationary mold 12 and movable mold 13 are attached to the stationary platen and the movable platen, respectively, such that the stationary mold 12 and the movable mold 13 face each other.

Further, an unillustrated injection apparatus is disposed such that it faces the stationary platen. The injection apparatus includes a heating cylinder (a cylinder member); a screw disposed in the heating cylinder so that the screw can rotate and can advance and retract; an injection nozzle attached to a front end of the heating cylinder; a hopper disposed in the vicinity of a rear end of the heating cylinder; a metering motor (a drive section for metering) connected to the screw; an injection motor (a drive section for injection) connected to the screw; etc.

When the mold-clamping motor of the mold-clamping apparatus is driven, the toggle mechanism is extended, and the movable platen is advanced, whereby mold closing is performed, and the movable mold 13 is brought into contact with the stationary mold 12. Subsequently, when the mold-clamping motor is driven further, the toggle mechanism generates a mold-clamping-force, with which the movable mold 13 is pressed against the stationary mold 12, whereby mold clamping is performed.

Meanwhile, in the injection apparatus, the metering motor is driven in a metering step so as to rotate the screw. As a result, resin supplied from the hopper is heated and melted within the heating cylinder, and is moved forward and accumulated forward of the screw. Accordingly, the screw is retreated to a predetermined position.

Further, in an injection step, the injection nozzle of the injection apparatus is pressed against the sprue 15 of the mold apparatus 11 in a clamped state; and the injection motor is driven so as to advance the screw. Thus, the resin accumulated forward of the screw is injected from the injection nozzle, and is charged into the cavities C1 and C2 via the gates g1 and g2, respectively.

The resin within the cavities C1 and C2 is cooled and hardened by the temperature control medium, and, at that time, the pattern of the transfer surface of the insert 24 is transferred to the resin.

Subsequently, the mold-clamping motor is driven in the reverse direction. As a result, the toggle mechanism contracts so as to retreat the movable platen, whereby mold opening is performed. In this manner, a molded product can be obtained.

In the mold apparatus 11, cooling temperature, which is the temperature of the entire mold apparatus, including the wall surface of the cavity, is set to a temperature several tens of degrees (Celsius) lower than the glass transition temperature of the resin so as to cool the resin. Thus, the time required to harden the resin is shortened, whereby the molding cycle is shortened.

Incidentally, when the molten resin flows into the cavities C1 and C2 and comes into contact with the wall surfaces of the cavities C1 and C2, a surface-hardened layer (skin layer) is formed instantaneously. Although the state of formation of the surface-hardened layer changes depending on molding conditions, the type of the resin, etc., if the surface-hardened layer grows, proper molding is hindered at portions of the resin which portions are in contact with the wall surfaces of the cavities C1 and C2, so that weld, transfer defect, or a like molding defect occurs.

In order to solve such a problem, in the present embodiment, the heat-insulating layer 25 is formed on the back side of the insert 24 as described above. Therefore, the insert 24 can be thermally insulated from a mold main portion of the movable mold 13 in which the heat-insulating layer 25 is not formed. Thus, when the resin is charged into the cavities C1 and C2, the temperature of the resin is temporarily maintained by the heat-insulating layer 25. As a result, formation and growth of a surface-hardened layer can be delayed, and transfer of the pattern of the transfer surface can be completed before the formation and growth of the surface-hardened layer. Therefore, occurrence of molding defects can be prevented. Further, since the cooling temperature of the mold apparatus 11 can be lowered, the resin having flowed into the cavities C1 and C2 via the gates g1 and g2 are quickly cooled as it moves within the cavities C1 and C2 toward the side away from the gates. As a result, the mold apparatus is more quickly brought into a state in which mold opening can be performed, as compared with the case of an ordinary mold apparatus. Thus, a mold-opening stand-by time between the timing at which charging of the resin is started and the timing at which the mold opening is started can be shortened, whereby molding cycle can be shortened.

Next, a method of forming the heat-insulating layer 25 will be described.

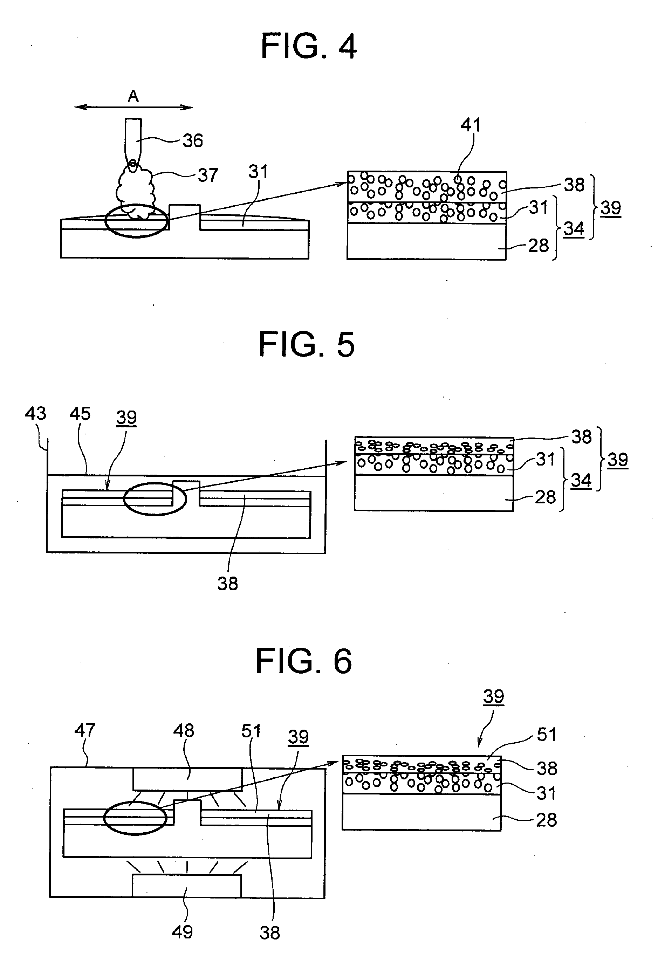

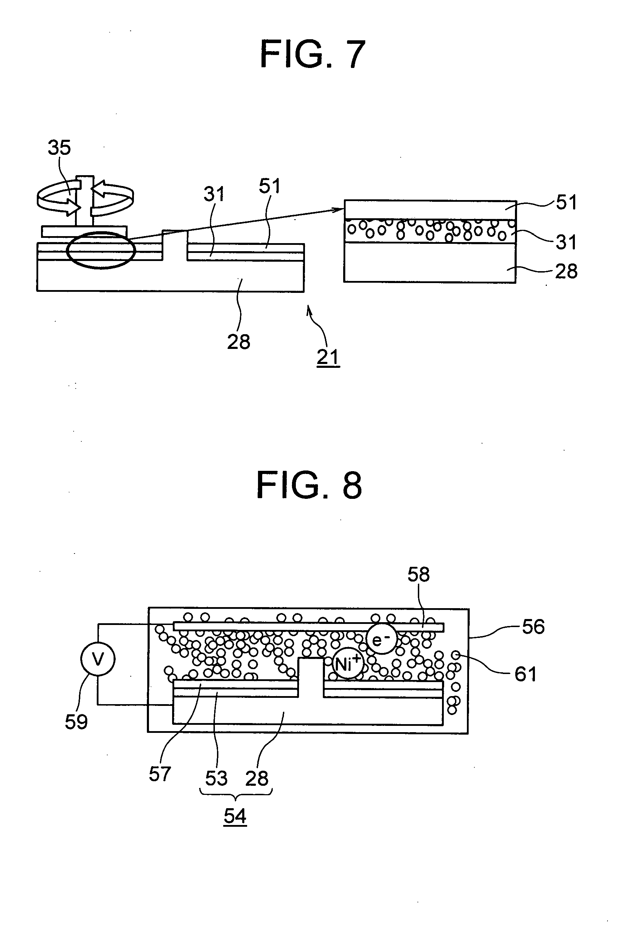

FIG. 2 is a view showing a first step of a method of forming a heat-insulating layer in the first embodiment of the present invention. FIG. 3 is a view showing a second step of the method of forming the heat-insulating layer in the first embodiment of the present invention. FIG. 4 is a view showing a third step of the method of forming the heat-insulating layer in the first embodiment of the present invention. FIG. 5 is a view showing a fourth step of the method of forming the heat-insulating layer in the first embodiment of the present invention. FIG. 6 is a view showing a fifth step of the method of forming the heat-insulating layer in the first embodiment of the present invention. FIG. 7 is a view showing a sixth step of the method of forming the heat-insulating layer in the first embodiment of the present invention.

In these drawings, reference numeral 28 denotes a base member which is made of steel and serves as a prototype of the upper plate 21; and 29 denotes a nozzle. In the first step, as shown in FIG. 2, while the base member 28 is rotated, the nozzle 29 is moved in a direction of arrow A so as to thermally spray a ceramic material (a heat-insulating material) having excellent heat-insulating properties. In the thermal spraying, powder of the ceramic material is melted in a hot flame injected from the nozzle 29, and is deposited on the base member 28. As a result, a film (a porous surface layer portion) 31 which includes a large number of pores 32 and which has excellent heat-insulating properties is formed on the base member 28. Notably, in the first step, for example, zirconia is used as the ceramic material.

Subsequently, in the second step, as shown in FIG. 3, the surface of the film 31 is polished by means of a polishing apparatus 35, whereby a first laminate 34 composed of the base member 28 and the film 31 is formed. Next, in the third step, as shown in FIG. 4, while the first laminate 34 is rotated, a nozzle 36 for performing slurry coating is moved in the direction of arrow A. In the slurry coating, slurry 37 formed by thoroughly dispersing powder of a ceramic material (a heat-insulating material) into a solvent along with organic polymers such as a dispersant, a binder, etc., is injected from the nozzle 36 and applied onto the first laminate 34. As a result, a film (a porous surface layer portion; a slurry coat layer) 38 which includes a large number of pores 41 and which has excellent heat-insulating properties is formed on the film 31. Notably, in the second step as well, for example, zirconia is used as the ceramic material. Further, a second laminate 39 is formed by the first laminate 34 and the film 38.

Subsequently, in the fourth step, as shown in FIG. 5, the second laminate 39 is immersed into an impregnating agent 45 stored in a container 43, and impregnated therewith, whereby chemical densification is performed. In this case, the impregnating agent 45 is composed of fine particles of a ceramic material (a heat-insulating material) (in the present embodiment, silica alumina (SiO₂·Al₂O₃)) and a binder for binding the particles (in the present embodiment, chrome oxide (Cr₂O₃)). As a result of impregnation, pores 41 located on the surface of the film 38 are closed, and the surface of the film 38 is smoothed. Notably, when the impregnation progresses to a certain degree, the surface of the film 38 is polished by means of the polishing apparatus 35.

Next, in the fifth step, as shown in FIG. 6, the second laminate 39 is placed in a heat treatment furnace 47, is heated by means of heaters (heating bodies) 48 and 49, and fired. As a result, a very dense composite ceramic layer 51 is formed at the surface of the film 38. The fourth step and the fifth step are repeated alternately, whereby substantially the entire film 38 becomes the composite ceramic layer 51.

Subsequently, in the sixth step, as shown in FIG. 7, the surface of the composite ceramic layer 51 is polished by means of the polishing apparatus 35, whereby the upper plate 21, which is composed of the base member 28, the film 31, and the composite ceramic layer 51, is completed. At that time, the surface roughness (arithmetical mean roughness) Ra of the composite ceramic layer 51, as defined by JIS (B0601), is set to fall within a range of 50 nm and 200 nm, inclusive, preferably, to be greater than 0 nm but not greater than 200 nm, whereby the composite ceramic layer 51 is made very smooth. In the present embodiment, measurement was performed by use of a contact-type surface-roughness measurement device (product of Taylor Hobson, Form TaySurf Series 2). Notably, at that time, the film 31 has a thickness of several hundreds of microns (e.g., about 300 µm), and the composite ceramic layer 51 has a thickness of several hundreds of microns (e.g., not less than 100 µm but less than 300 µm).

As described above, in the present embodiment, the pores 41 at the surface of the film 38 are closed by means of impregnation, and the very dense composite ceramic layer 51 is formed by means of firing. Therefore, the surface of the film 38 can be made very smooth. Accordingly, it becomes possible to enhance the durability of the heat-insulating layer 25, and to prevent formation of scraping marks on the back surface of the insert 24 to thereby improve the durability of the insert 24.

Further, since the film 31 is formed on the base member 28 and the composite ceramic layer 51 is formed on the film 31, even when expansion and contraction occur in a heat cycle repeated as a result of repeated molding operation, a surface of the base member 28 and a corresponding surface of the film 31 do not scrape against each other, and a surface of the film 31 and a corresponding surface of the composite ceramic layer 51 do not scrape against each other. Thus, wear of the film 31 and the composite ceramic layer 51 can be prevented, whereby the durability of the heat-insulating layer 25 can be improved.

Further, since the film 31 formed by use of zirconia or the like is not required to be thick, the brittleness of the film 31 can be lowered. Accordingly, even when injection force, mold-clamping-force, or the like is large, the film 31 becomes unlikely to be broken. Further, even when the base member 28 and the film 31 differ in coefficient of thermal expansion, the film 31 does not break during a heat cycle. Therefore, the durability of the heat-insulating layer 25 can be improved.

Next, a second embodiment of the present invention will be described. Components having the same structures as those of the first embodiment are denoted by the same reference numerals. For the effects that the second embodiment yields through employment of the same structure as the first embodiment, the effects that the first embodiment yields are cited.

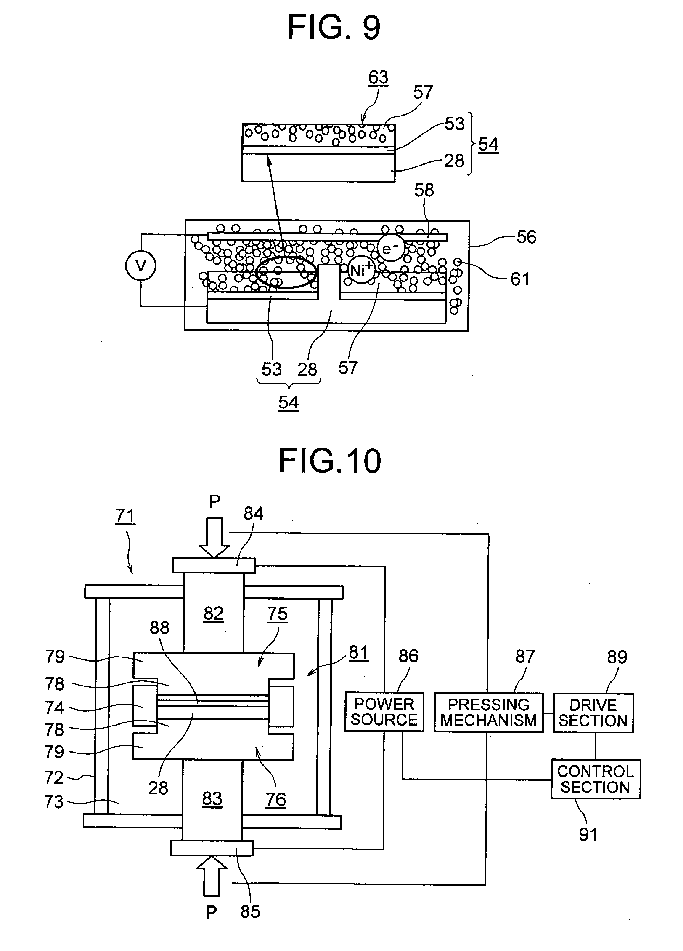

FIG. 8 is a first view showing a method of forming a heat-insulating layer in a second embodiment of the present invention. FIG. 9 is a second view showing the method of forming a heat-insulating layer in the second embodiment of the present invention.

In this case, in the first step, a ceramic material (zirconia) is thermally sprayed on the base member 28, which is made of steel and serves as a prototype of the upper plate 21, as in the first step in the first embodiment, or slurry containing a ceramic material (zirconia) is applied to the base member 28, as in the third step in the first embodiment, whereby a film (a porous surface layer portion) 53 which includes a large number of pores and which has excellent heat insulating properties is formed. Notably, a first laminate 54 is formed by the base member 28 and the film 53.

Subsequently, in the second step, as shown in FIG. 8, the first laminate 54 is immersed into a plating bath 56 and the film 53 is plated, whereby electrochemical densification is performed. In the present embodiment, nickel (Ni) electroless plating is performed. Specifically, a nickel plate 58 is disposed within the plating bath 56, and the base member 28 and the plate 58 are connected together via a power source 59.

In the electroless plating, by means of electrons e⁻ which are produced when a reducer contained in a plating solution within the plating bath 56 is oxidized on a catalytically active palladium surface, nickel ions Ni⁺ are reduced, whereby a plating film 57 is formed.

In this case, as the plating film 57 is formed on the surface of the film 53, the pores are filled with nickel. Therefore, the surface of the film 53 can be made very smooth. Subsequently, the surface of the film 53 is polished by means of an unillustrated polishing apparatus, whereby the upper plate 21 (FIG. 1) , which is composed of the base member 28, the film 53, and a composite plating layer 63, is completed. At that time, the surface roughness of the composite plating layer 63 is on the order of several tens of nm, and the composite plating layer 63 becomes very smooth.

Further, another function can be imparted to the composite plating layer 63 by mixing fine particles 61 into the plating solution used for performing plating on the film 53. For example, when nano-particles of Teflon (registered trademark), DLC, or the like are mixed into the plating solution as the fine particles 61, Teflon, DLC, or the like is codeposited in the plating film 57, whereby the composite plating layer 63 is formed so as to reduce the coefficient of friction of the surface of the film 53 and prevent separation of the plating film. Further, when the fine particles 61 of Teflon are mixed, the heat-insulating properties of Teflon can be utilized, so that the heat-insulating properties of the heat-insulating layer 25 can be enhanced.

Notably, the surfaces of the fine particles 61 may be electrified or a preliminary treatment may be performed for the fine particles 61 in order to allow the fine particles 61 to uniformly disperse within the plating solution, to thereby prevent precipitation or aggregation of the fine particles 61.

Next, a third embodiment of the present invention will be described. Components having the same structures as those of the first embodiment are denoted by the same reference numerals. For the effects that the third embodiment yields through employment of the same structure as the first embodiment, the effects that the first embodiment yields are cited.

FIG. 10 is a schematic view showing a discharge plasma sintering apparatus according to a third embodiment of the present invention.

In this drawing, reference numeral 71 denotes a discharge plasma sintering apparatus, and reference numeral 72 denotes a sealed housing having a circular tubular shape. A chamber 73 within the housing 72 is connected to an unillustrated vacuum pump, which serves as a vacuum generation source, and is evacuated upon activation of the vacuum pump. Notably, instead of evacuating the chamber 73, an inert gas such as argon gas may be charged into the chamber 73. Further, an unillustrated cooling pipe is provided within the wall of the housing 72, and unillustrated cooling water, which serves as a cooling medium, is circulated through the cooling pipe, whereby the chamber 73 is cooled. For such cooling, the cooling pipe is connected to an unillustrated cooling apparatus, and cooling water is supplied to the cooling pipe.

Reference numeral 74 denotes a cylindrical die formed of an electrically conductive material such as graphite. An upper punch (a first punch) 75 and a lower punch (a second punch) 76 are disposed above and below the die 74. Each of the upper punch 75 and the lower punch 76 assumes a bar-like shape, and is formed of an electrically conductive material such as graphite. The upper punch 75 and the lower punch 76 are disposed such that they face each other. The upper punch 75 includes a punch main portion 78 projecting toward the interior of the die 74, and a flange-shaped pressing portion 79 provided at the upper end of the upper punch 75 and formed integrally with the punch main portion 78. Similarly, the lower punch 76 includes a punch main portion 78 projecting toward the interior of the die 74, and a flange-shaped pressing portion 79 provided at the lower end of the lower punch 76 and formed integrally with the punch main portion 78. Notably, the die 74, the upper punch 75, and the lower punch 76 constitute a sintering die 81. In the present embodiment, the die 74, the upper punch 75, and the lower punch 76 are formed of graphite. However, instead of graphite, an electrically conductive material whose melting point is equal to or higher than 1100°C, such as tungsten (W), molybdenum (Mo), or carbon (C), may be used.

An upper electrode (a first electrode) 82 is disposed above the upper punch 75 and a lower electrode (a second electrode) 83 is disposed below the lower punch 76 such that they extend vertically. The upper electrode 82 has an electrode terminal 84, and the lower electrode 83 has an electrode terminal 85. The upper electrode 82 and the lower electrode 83 are connected to a DC power source 86 via the electrode terminals 84 and 85.

The upper electrode 82 and the lower electrode 83 are disposed such that they can move vertically, and a pressing mechanism 87 is connected to the upper end of the upper electrode 82 and the lower end of the lower electrode 83. A pressing force P generated by the pressing mechanism 87 is transmitted to the upper electrode 82 and the lower electrode 83 so as to move the upper electrode 82 downward and move the lower electrode 83 upward. The base member 28, which serves as a prototype of the upper plate 21 (FIG. 1), is set within the die 74, and sintering powder 88; e.g., powder of zirconia or yttria, is charged onto the base material 28 as a ceramic material (a heat-insulating material). Subsequently, the pressing mechanism 87 is operated so as to move the upper electrode 82 and the lower electrode 83 to thereby press the sintering powder 88 with the above-described pressing force P. Notably, although a servomotor, a speed reducer, etc. are used as a drive section 89 of the pressing mechanism 87, a hydraulic cylinder, a pneumatic cylinder, or the like may be used.

In the present embodiment, the upper electrode 82 and the lower electrode 83 are disposed such that they can move vertically, and the upper electrode 82 and the lower electrode 83 are moved so as to press the sintering powder 88. However, the present embodiment may be modified in such a manner that one of the upper electrode 82 and the lower electrode 83 is fixed, the other electrode is disposed to be movable, and the other electrode is moved so as to press the sintering powder 88.

A control section 91 is provided so as to generate a predetermined pressing force P by the pressing mechanism 87 and transmit the pressing force P to the upper electrode 82 and the lower electrode 83 and to generate a predetermined pulse of a predetermined voltage by the power source 86. The control section 91 is connected to the power source 86, and is connected to the pressing mechanism 87 via the drive section 89.

When discharge plasma sintering is performed in the discharge plasma sintering apparatus 71 having the above-described structure, the upper electrode 82 is first moved upward so as to move the upper punch 75 upward, to thereby open the upper end of the die 74. The base member 28 and the sintering powder 88 are placed into a bottomed charging chamber formed by the die 74 and the lower punch 76.

Subsequently, the upper punch 75 and the upper electrode 82 are moved downward so as to close the charging chamber. After that, unillustrated pressing processing means (a pressing processing section) of the control section 91 performs pressing processing so as to operate the pressing mechanism 87 by driving the drive section 89, to thereby move the upper electrode 82 and the lower electrode 83. Thus, the sintering power 88 is pressed with the predetermined pressing force Unillustrated voltage application processing means (a voltage application processing section) of the control section 91 then performs voltage application processing so as to operate the power source 86, to thereby apply voltage (pluses) between the upper electrode 82 and the lower electrode 83 for about 10 minutes. Specifically, a voltage within a range of 0.1 V to 5 V, inclusive, is applied between the upper electrode 82 and the lower electrode 83 such that a pulsed DC current within a range of 1000 A to 8000 A, inclusive, flows therebetween. Notably, in the present embodiment, a pulsed DC current is supplied. However, an AC current or a current having a rectangular waveform, a triangular waveform, a trapezoidal waveform, or a like waveform may be supplied. Moreover, a current having a constant magnitude may be supplied for a certain period of time.

As a result, the sintering powder 88 is heated to a temperature within a range of 500°C to 3000°C, inclusive, so that the sintering powder 88 is sintered by means of discharge plasma sintering, and becomes a sintered body. In this case, heat is generated at points where particles of the sintering powder 88 are in contact with one another, and the particles are joined together. Although a predetermined binder is added to the sintering powder 88 in order to facilitate handling of the sintering powder 88, the binder disappears when the pulsed current flows through the sintering powder 88.

In this manner, the heat-insulating layer 25 is formed on the base member 28, and a laminate is formed by the base member 28 and the heat-insulating layer 25. Subsequently, with a slight delay, the die 74, the upper punch 75, and the lower punch 76 are heated by means of Joule heat, to thereby maintain the temperature of the sintered body. Subsequently, they are cooled by means of cooling water.

Next, the upper punch 75 and the upper electrode 82 are moved upward, and the laminate is removed from the charging chamber.

In this case, the ceramic material is physically densified by means of discharge plasma sintering, and the density of the ceramic material can be increased to at least 99% the theoretical value. When the surface of the heat-insulating layer 25 is polished by use of an unillustrated polishing apparatus, the surface can be made smooth to a level corresponding to the grain size of the sintering powder 88. Further, since local heating is performed, thermal influence on the base member 28 can be reduced. Notably, in order to completely eliminate the thermal influence on the base member 28, a thin sheet may be formed by a sintered body and fixedly provided between the upper plate 21 and the insert 24 by means of bonding.

In the present embodiment, one type of sintering powder 88 is charged on the base member 28 within the sintering die 81. However, a plurality of types of sintering powders may be charged so as to form a plurality of heat-insulating layers. In this case, the properties of a heat-insulating layer(s) on the side toward the base member 28 can be determined to match the properties of the base member 28, and the properties of a heat-insulating layer(s) on the side toward the insert 24 can be determined to match the properties of the insert 24. Therefore, durability of the heat-insulating mold can be improved. In this case, when each sintering powder is charged, the content of the sintering powder is changed gradually so as to form a gradient layer, to thereby improve the joint between adjacent heat-insulating layers.

The present invention is not limited to the above-described embodiments. Numerous modifications and variations of the present invention are possible in light of the spirit of the present invention, and they are not excluded from the scope of the present invention.

## Claims

1. A heat-insulating mold comprising:
(a) a mold plate; and
(b) a transfer member attached to the mold plate and comprising a transfer surface on a surface which faces a cavity, the transfer surface comprising fine projections and depressions formed in a predetermined pattern, wherein
(c) a heat-insulating layer whose surface is densified is formed on a surface of the mold plate which surface comes into contact with the transfer member.

2. A heat-insulating mold according to claim 1, wherein the heat-insulating layer has a surface roughness Ra of 200 nm or less.

3. A heat-insulating mold according to claim 1, wherein the densification of the surface of the heat-insulating layer is performed by impregnating an impregnating agent into a porous surface layer portion formed of a heat-insulating material.

4. A heat-insulating mold according to claim 1, wherein the densification of the surface of the heat-insulating layer is performed by forming a plating film on a porous surface layer portion formed of a heat-insulating material.

5. A heat-insulating mold according to claim 1, wherein the densification of the surface of the heat-insulating layer is performed by performing discharge plasma sintering on sintering powder formed of a heat-insulating material.

6. A mold component which is disposed on the back side of a transfer member comprising a transfer surface comprising projections and depressions formed in a predetermined pattern, wherein
a heat-insulating layer whose surface is densified is formed on a surface of the mold component which surface comes into contact with the transfer member.

7. A molding machine comprising a heat-insulating mold according to any one of claims 1 to 5.

8. A method of manufacturing a heat-insulating mold comprising a mold plate, and a transfer member attached to the mold plate and having a transfer surface on a surface which faces a cavity, the transfer surface comprising fine projections and depressions formed in a predetermined pattern, the method comprising the step of forming a heat-insulating layer whose surface is densified on a surface of the mold plate which surface comes into contact with the transfer member.
